(19) Europäisches Patentamt

European Patent Office

Office européen des brevets

(11) **EP 1 160 434 B1**

(12) **FASCICULE DE BREVET EUROPEEN**

(45) Date de publication et mention
de la délivrance du brevet:
**02.11.2006 Bulletin 2006/44**

(51) Int Cl.:
*F02D 33/02* (2006.01)     *F02B 37/24* (2006.01)
*F02D 11/10* (2006.01)

(21) Numéro de dépôt: **01401253.8**

(22) Date de dépôt: **15.05.2001**

(54) **Système de commande d'un actionneur d'ouverture/fermeture d'un turbocompresseur à géométrie variable équipant un moteur de véhicule automobile**

Steuervorrichtung zum Öffnen/Schliessen eines Stellglieds eines Turboverdichters mit variabler Geometrie, der eine Maschine für ein Motorfahrzeug ausrüstet

Control device for an actuator closing /opening a turbocompressor with variable geometry equipping an engine for an automotive vehicle

(84) Etats contractants désignés:
**AT BE CH CY DE DK ES FI FR GB GR IE IT LI LU MC NL PT SE TR**

(30) Priorité: **29.05.2000 FR 0006860**

(43) Date de publication de la demande:
**05.12.2001 Bulletin 2001/49**

(73) Titulaire: **Peugeot Citroen Automobiles SA
92200 Neuilly sur Seine (FR)**

(72) Inventeurs:
• **Salin, Emmanuel
92700 Colombes (FR)**
• **Dubois, Frédéric
78600 Maisons Lafitte (FR)**

• **Le Tallec, Patrice
78500 Sartrouville (FR)**

(74) Mandataire: **Jacobson, Claude et al
Cabinet Lavoix
2, Place d'Estienne d'Orves
75441 Paris Cedex 09 (FR)**

(56) Documents cités:
**DE-A- 19 712 861          GB-A- 2 105 878
US-A- 5 214 919**

• **PATENT ABSTRACTS OF JAPAN vol. 1999, no. 05, 31 mai 1999 (1999-05-31) & JP 11 036873 A (MITSUBISHI MOTORS CORP), 9 février 1999 (1999-02-09)**

**Description**

La présente invention concerne un système de commande d'un actionneur d'ouverture/fermeture d'un turbocompresseur à géométrie variable équipant un moteur de véhicule automobile.

Il existe déjà dans l'état de la technique, des systèmes de commande de ce type qui comportent des moyens d'acquisition d'informations relatives au fonctionnement du moteur du véhicule et des moyens d'établissement d'un signai de commande correspondant d'ouverture/fermeture du turbocompresseur.

Lors d'une accélération (phase transitoire), le niveau de couple délivré par le moteur est directement proportionnel au débit de carburant injecté et donc à la pression de suralimentation délivrée (rapport air/carburant sensiblement constant).

Ce niveau est également influencé par la pression à l'échappement (avant turbocompresseur) qui engendre une contre pression dégradant le rendement du moteur.

Ce couple moteur peut s'exprimer de la façon suivante :

$$C = aP_2 - b\ (P_3\text{-}P_2)$$

où
C représente le couple moteur,
$P_2$ la pression de suralimentation,
$P_3$ la pression à l'échappement, et
a et b des coefficients.

Si le turbocompresseur est un turbocompresseur standard à géométrie fixe, l'écart $P_3$ - $P_2$ reste généralement faible et ne pose pas particulièrement de problème.

En revanche, dans le cas d'un turbocompresseur à géométrie variable, la section offerte aux gaz pouvant être très petite, le terme $P_3$ peut devenir très important et ainsi pénaliser fortement le couple moteur.

Le but de l'invention est donc de résoudre ces problèmes.

A cet effet, l'invention a pour objet un système de commande d'un actionneur d'ouverture/fermeture d'un turbocompresseur à géométrie variable équipant un moteur de véhicule automobile, du type comportant des moyens d'acquisition d'informations relatives au fonctionnement du moteur du véhicule et des moyens d'établissement d'un signal de commande correspondant d'ouverture/fermeture du turbocompresseur, caractérisé en ce qu'il comporte en outre des moyens d'analyse des conditions de fonctionnement du moteur du véhicule pour détecter une requête d'augmentation de couple du moteur supérieure à une valeur prédéterminée, pour déclencher le fonctionnement de moyens de génération d'un signal de valeur limite maximale progressivement décroissant, du signal de commande du turbocompresseur.

L'invention sera mieux comprise à la lecture de la description qui va suivre, donnée uniquement à titre d'exemple et faite en se référant aux dessins annexés, sur lesquels :

- la Fig.1 représente un schéma synoptique illustrant la structure générale d'un système de commande d'un actionneur d'ouverture/fermeture d'un turbocompresseur ;
- la Fig.2 représente un schéma synoptique illustrant la structure de moyens de génération d'un signal de valeur limite maximale du signal de commande de ce turbocompresseur, entrant dans la constitution du système selon l'invention ; et
- la Fig.3 illustre une transition stabilisé/transitoire.

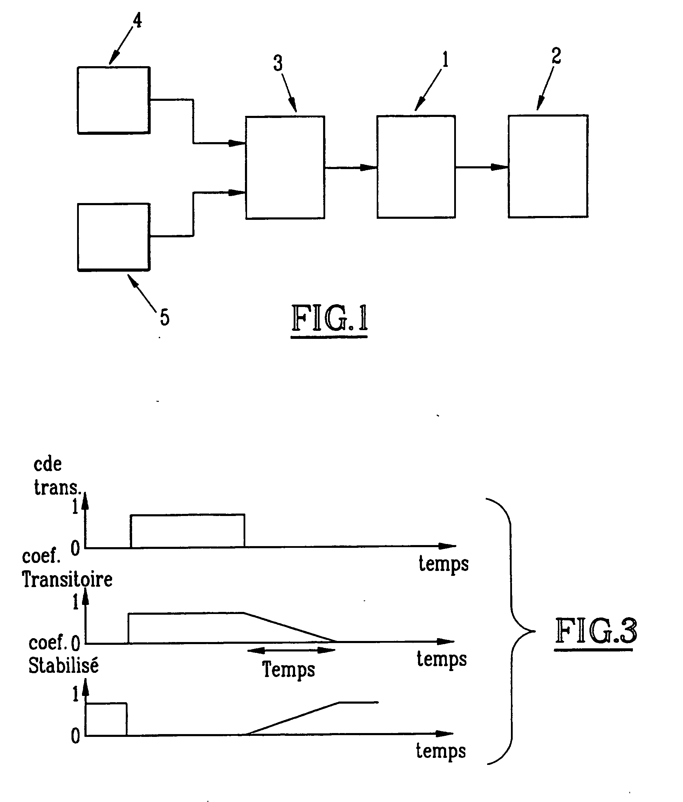

On a représenté sur la figure 1, un système de commande d'un actionneur d'ouverture/fermeture d'un turbocompresseur à géométrie variable équipant un moteur de véhicule automobile.

Sur cette figure 1, l'actionneur est désigné par la référence générale 1 et le turbocompresseur par la référence générale 2.

Cet actionneur est piloté grâce à un signal de commande correspondant d'ouverture/fermeture du turbocompresseur délivré par des moyens d'établissement de celui-ci désigné par la référence générale 3.

En fait, ces moyens d'établissement sont associés à des moyens d'acquisition d'informations relatives au fonctionnement du moteur du véhicule désignés par la référence générale 4.

On conçoit alors qu'en fonction de ces informations relatives au fonctionnement du moteur du véhicule, on peut établir un signal de commande d'ouverture/fermeture du turbocompresseur.

Selon l'invention, ce système comporte en outre des moyens d'analyse des conditions de fonctionnement du moteur du véhicule pour détecter une requête d'augmentation de couple du moteur supérieure à une valeur prédéterminée afin de déclencher le fonctionnement de moyens de génération d'un signal de valeur limite maximale progressivement décroissant, du signal de commande du turbocompresseur.

Ces moyens sont désignés par la référence générale 5 sur cette figure 1 et délivrent alors aux moyens 3, un signal de valeur limite maximale permettant de limiter la refermeture du turbocompresseur à géométrie variable lors d'accélérations sévères du véhicule et ainsi d'éviter la formation d'un « bouchon » préjudiciable à la montée de couple.

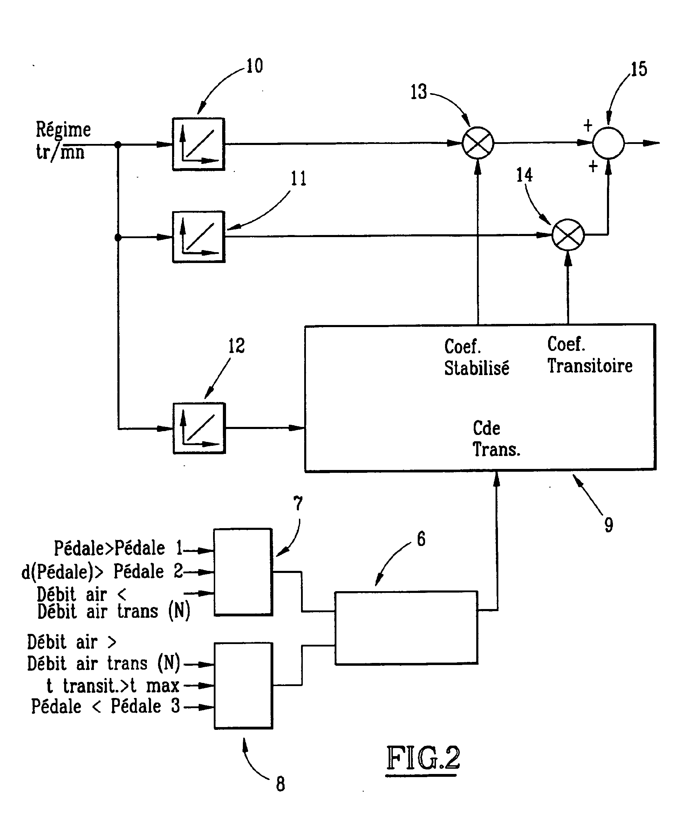

Un exemple de réalisation de ces moyens est illustré sur la figure 2.

Ces moyens comportent une bascule RS désignée par la référence générale 6 dont les entrées sont reliées à des moyens d'analyse des conditions de fonctionnement du moteur du véhicule pour activer/désactiver le fonctionnement des moyens de génération du signal de valeur limite maximale.

Une entrée de cette bascule RS est reliée à une porte ET 7 recevant en entrée un certain nombre d'informations relatives au fonctionnement du moteur pour activer ces moyens dans certaines conditions.

Une autre entrée de cette bascule RS est reliée à une porte OU 8 recevant en entrée un certain nombre d'informations relatives au fonctionnement du moteur pour désactiver ces moyens dans certaines conditions.

L'activation de ces moyens peut par exemple être obtenue lorsque la pédale d'accélérateur du véhicule dépasse une position prédéterminée que la vitesse de déplacement de celle-ci dépasse une valeur prédéterminée, et que le débit d'air en entrée du moteur est inférieur à une valeur prédéterminée.

A titre d'exemple, les valeurs suivantes peuvent être utilisées.

Pédale 1 = 0

d(Pédale 2) = 15 m$^3$/cp.s

Courbe de débit d'air (=f(N)) pour déclencher la stratégie

| N(tr/min) | Débit d'air (mg/cp) |
|-----------|---------------------|
| 1000 | 620 |
| 1300 | 620 |
| 1500 | 680 |
| 1750 | 750 |
| 2000 | 800 |
| 2500 | 800 |
| à | |
| 4500 | 800 |

La désactivation du fonctionnement de ces moyens peut être obtenue lorsque le débit d'air en entrée du moteur est supérieur à une valeur prédéterminée, lorsque la position de la pédale d'accélérateur revient dans une position prédéterminée ou au bout d'une période de temps maximale prédéterminée.

A titre d'exemple, les valeurs suivantes peuvent être utilisées.

| N(tr/min) | Débit d'air (mg/cp) |
|-----------|---------------------|
| 1000 | 650 |
| 1300 | 650 |
| 1500 | 720 |
| 1750 | 800 |
| 2000 | 900 |
| 2500 | 900 |
| à | |
| 4500 | 900 |

Tmax = 1000 ms

Pédale 3 = 0

La sortie de la bascule 6 délivre alors un signal de commande de transition correspondant à des moyens de gestion du signal de valeur limite maximale, qui sont désignés par la référence générale 9 sur cette figure 2.

En fait, ces moyens de gestion du signal de valeur limite maximale comprennent des moyens d'établissement de celui-ci à partir de deux valeurs de commande complémentaires, en stabilisé et en transitoire, issues de deux générateurs de valeurs respectifs désignés par les références 10 et 11.

Ces générateurs 10, 11 reçoivent en entrée une information de régime de rotation du moteur.

Une base de temps désignée par la référence générale 12 recevant également en entrée une information de régime de rotation du moteur, est associée à ces moyens de gestion 9.

En fait, les valeurs en stabilisé et en transitoire délivrées par les deux générateurs de valeurs 10 et 11, sont pondérées par des coefficients respectifs complémentaires, délivrés par les moyens de gestion 9, variables de façon continue comme cela est illustré sur le figure 3, sur une période de temps prédéterminée délivrée par la base de temps 12 raccordée à ces moyens de gestion.

Ces coefficients en stabilisé et en transitoire, sont alors délivrés à des moyens de pondération correspondants 13 et 14 (Fig.2), des moyens de sommation 15 de ces valeurs après pondération étant utilisés pour délivrer le signal de valeur limite maximale.

On conçoit alors que ceci permet de limiter à une valeur maximale, le signal de commande de l'actionneur du turbocompresseur à géométrie variable, la détermination de la limitation étant réalisée en fonction de l'importance du couple demandé et réalisé par le moteur.

Deux courbes de limitation sont sélectionnées selon une phase stabilisée ou une phase transitoire.

La commutation entre ces deux phases est réalisée progressivement par une rampe temporelle, la gestion de la limitation étant une fonction qui assure une transition progressive de la détermination des limitations en fonction du temps et d'un signal de commande.

On conçoit alors que grâce à une telle structure, on limite le signal de commande du turbocompresseur pour limiter la refermeture de celui-ci lors d'accélérations sévères du véhicule, ce qui permet d'éviter la formation d'un « bouchon » à l'échappement, préjudiciable à la montée de couple.

Il va de soi bien entendu que d'autres modes de réalisation encore de ce système peuvent être envisagés.

**Revendications**

**1.** Système de commande d'un actionneur d'ouverture/ fermeture d'un turbocompresseur à géométrie variable (2) équipant un moteur de véhicule automobile, du type comportant des moyens (4) d'acquisition d'informations relatives au fonctionnement du moteur du véhicule et des moyens (3) d'établissement d'un signal de commande correspondant d'ouverture/fermeture du turbocompresseur, **caractérisé en**

**ce qu'**il comporte en outre des moyens (6,7) d'analyse des conditions de fonctionnement du moteur du véhicule pour détecter une requête d'augmentation de couple du moteur supérieure à une valeur prédéterminée, pour déclencher le fonctionnement de moyens (9,10,11,12,13,14,15) de génération d'un signal de valeur limite maximale progressivement décroissant, du signal de commande du turbocompresseur.

2. Système selon la revendication 1, **caractérisé en ce que** les moyens de génération du signal de valeur limite maximale comprennent des moyens (15) d'établissement de celui-ci à partir de deux valeurs de commande complémentaire en stabilisé et en transitoire, issues de deux générateurs de valeurs respectifs (10,11), pondérées par des coefficients respectifs complémentaires (en 13,14), variables de façon continue, sur une période de temps prédéterminée délivrée par une base de temps (12), raccordée à des moyens (9) de génération des coefficients de pondération respectifs.

3. Système selon la revendication 2, **caractérisé en ce que** les générateurs (10,11) des valeurs de commande en stabilisé et en transitoire et la base de temps (12) reçoivent en entrée, une information de régime de rotation du moteur.

4. Système selon la revendication 2 ou 3, **caractérisé en ce que** les moyens de génération sont associés à des moyens (6,7,8) d'activation/désactivation adaptés pour activer ceux-ci lorsque la pédale d'accélérateur du véhicule dépasse une position prédéterminée, la vitesse de déplacement de celle-ci dépasse une valeur déterminée et le débit d'air en entrée du moteur est inférieur à une valeur prédéterminée et pour désactiver le fonctionnement de ceux-ci lorsque le débit d'air en entrée du moteur est supérieur à la valeur prédéterminée, la pédale d'accélérateur revient dans une position prédéterminée ou au bout d'une période de temps maximale prédéterminée.

5. Système selon la revendication 4, **caractérisé en ce que** les moyens de commande (6) comprennent une bascule RS.

**Claims**

1. Control system for an actuator to open/close a variable-geometry turbocharger (2) equipping a motor vehicle engine, of the type including means (4) of acquiring information relating to the operation of the vehicle engine and means (3) of establishing a corresponding control signal to open/close the turbocharger, **characterised in that** it additionally includes means (6, 7) of analysing the operating conditions of the vehicle engine to detect a request for an increase in engine torque above a predetermined value, to initiate the operation of means (9, 10, 11, 12, 13, 14, 15) of generating a progressively decreasing maximum limit value signal, of the turbocharger control signal.

2. System according to claim 1, **characterised in that** the means of generating the maximum limit value signal includes means (15) of establishing this signal from two complementary control values in steady-state and transient phase, produced by two respective value generators (10, 11), weighted by respective complementary coefficients (in 13, 14), continuously variable, over a predetermined time period generated by a time base (12), connected to means (9) of generating the respective weighting coefficients.

3. System according to claim 2, **characterised in that** the generators (10, 11) of the steady-state and transient phase control values and the time base (12) receive engine speed information at their inputs.

4. System according to claim 2 or 3, **characterised in that** the generating means are associated with means (6, 7, 8) of activation/deactivation designed to activate the latter when the vehicle's accelerator pedal exceeds a predetermined position, the speed of movement of the latter exceeds a determined value, and the air flow entering the engine is below a predetermined value, and to deactivate the operation thereof when the air flow entering the engine is greater than the predetermined value, the accelerator pedal returns to a predetermined position, or at the end of a predetermined maximum time period.

5. System according to claim 4, **characterised in that** the control means (6) include an RS flip-flop.

**Patentansprüche**

1. Regelsystem für das Öffnen/Schließen eines Stellantriebs eines Turboaufladers mit variabler Geometrie (2) für einen Motor eines Kraftfahrzeugs, der Mittel (4) zur Erfassung von sich auf den Motorbetrieb des Kraftfahrzeugs beziehenden Daten sowie Mittel (3) für das Erzeugen eines entsprechenden Signals zur Steuerung des Öffnens/Schließens des Turboaufladers umfasst, **dadurch gekennzeichnet, dass** er außerdem Mittel (6, 7) für die Analyse der Betriebsbedingungen des Kraftfahrzeugmotors umfasst, um zu überprüfen, ob das Motordrehmoment über einen vorbestimmten Wert steigt, um die Funktion der Mittel (9, 10, 11, 12, 13, 14, 15) für die Erzeugung eines stetig abnehmenden Signals des oberen Grenzwerts für das Steuerungssignal des Turboaufladers auszulösen.

2.　System gemäß Anspruch 1, **dadurch gekennzeichnet, dass** die Mittel für das Erzeugen des Signals des oberen Grenzwerts Mittel (15) für das Erzeugen desselben aus zwei komplementären Steuerungswerten umfassen, von denen einer im stabilen Betrieb und einer im Übergangsbetrieb auftritt, die aus zwei Elementen für die Erzeugung der jeweiligen Werte (10, 11) stammen, welche über einen vorbestimmten, von einer Zeitbasis (12) vorgegebenen Zeitraum hinweg mit entsprechenden komplementären, stetig variablen Koeffizienten gewichtet werden (in 13, 14), und welche mit Mitteln (9) für die Erzeugung von entsprechenden Gewichtungskoeffizienten verbunden sind.

3.　System gemäß Anspruch 2, **dadurch gekennzeichnet, dass** die Elemente (10, 11) für das Erzeugen der Steuerungswerte im stabilen Betrieb und im Übergangsbetrieb und die Zeitbasis (12) als Eingabedaten eine Information über die Drehzahl des Motors erhalten.

4.　System gemäß Anspruch 2 oder 3, **dadurch gekennzeichnet, dass** die Mittel für die Erzeugung mit Mitteln (6, 7, 8) für die Aktivierung/Deaktivierung verbunden sind, die geeignet sind, diese zu aktivieren, wenn das Gaspedal des Fahrzeugs von einer vorbestimmten Stellung abweicht, die Geschwindigkeit, mit der das Gaspedal bewegt wird, einen bestimmten Wert überschreitet und die in den Motor einströmende Luftmenge unter einem vorbestimmten Wert liegt; und welche geeignet sind, den Betrieb dieser Mittel zu deaktivieren, wenn die in den Motor einströmende Luftmenge über einem vorbestimmten Wert liegt und das Gaspedal in eine vorbestimmte Stellung zurückkehrt, oder wenn ein vorbestimmter maximaler Zeitraum abgelaufen ist.

5.　System gemäß Anspruch 4, **dadurch gekennzeichnet, dass** die Steuerungsmittel (6) einen RS-Flipflop umfassen.

FIG.1

cde
trans.

coef.
Transitoire

coef.
Stabilisé

Temps

temps

temps

temps

FIG.3

Régime
tr/mn

Pédale>Pédale 1
d(Pédale)> Pédale 2
Débit air <
Débit air trans (N)

Débit air >
Débit air trans (N)
t transit.>t max
Pédale < Pédale 3

Coef.
Stabilisé

Coef.
Transitoire

Cde
Trans.

FIG.2